# DEMANDE DE BREVET EUROPEEN

(11) **EP 1 586 602 A1**
(43) Date de publication de la demande: **19.10.2005**
(21) Numéro de dépôt: 04290995.2
(22) Date de dépôt: 14.04.2004
(51) Int. Cl.: C08K 3/00, C09C 1/30, C01B 33/193, C08J 3/215, B01J 19/12, F26B 3/347

(54) **Procédé de production de charges minérales traitées ou en mélange-maitre, par séchage UHF du résultat du mélange d'une émulsion de polymère et d'une suspension des-dits produits minéraux**

(71) Demandeur: Dodane, Bernard, 92210 Saint-Cloud (FR)
(72) Inventeur: Dodane, Bernard, 92210 Saint-Cloud (FR)

(57) **Abrégé**

Procédé de production de charges minérales traitées ou en mélange-maître, par séchage UHF du coagulum préalablement obtenu par mélangeage et coagulation conjointe d'une émulsion de polymère et d'une suspension des-dits produits minéraux.

L'invention concerne un procédé de production de charges minérales à surface modifiée, encapsulées ou présentées sous forme de mélange-maître ou d'alliages composites, où un séchage par Ultra-Hautes-Fréquences UHF est appliqué au coagulum préalablement obtenu par mélangeage et coagulation conjointe d'une émulsion de polymère avec une suspension ou un slurry d'un composé minéral. Le procédé permet de sécher à volonté la fraction minérale sans dégrader thermiquement la fraction polymérique.

Les produits minéraux concernés sont en particulier ceux obtenus par précipitation, en particulier la silice et ses dérivés, l'alumine, l'hydrotalcite, l'oxyde de titane et le carbonate de calcium, mais aussi des charges poreuses comme le noir de carbone. Les polymères sont en particulier des élastomères.

Le procédé est plus particulièrement destiné à l'élaboration de charges et additifs pour polymères, par traitement de surface ou encapsulage, et à la confection de mélanges-maîtres ou alliages composites.

## Description

La présente invention concerne un procédé de production de charges minérales traitées en surface, encapsulées ou présentées sous forme de mélange-maître ou d'alliage composite, par séchage UHF du coagulum préalablement obtenu par mélangeage et coagulation conjointe d'une émulsion de polymère avec une suspension des-dits produits minéraux, permettant ainsi de sécher à volonté la fraction minérale sans dégrader thermiquement la fraction polymérique.

L'emploi des polymères se conçoit difficilement sans addition de charge. Une des charges minérales renforçantes les plus utilisées est le noir de carbone (« Carbon black »), mais d'autres produits minéraux, en particulier ceux obtenus par précipitation et encore plus en particulier à partir de silice, sont largement et même de plus en plus utilisés comme charges actives dans la formulation industrielle des polymères et en particulier des élastomères, en vue de leur conférer des propriétés particulières, comme le démontrent le brevet et les publications suivantes :
- ADIT, Ambassade de France aux Etats Unis, *Vigie Matériaux* 60, (1/03/2001),
- KLINE, Speciality Silicas Global Business Forum, Bruxelles, 26-27 Octobre 1999,
- LE MAITRE, Société Michelin, *« Influence du comportement viscoélastique des matériaux sur la résistance au roulement des pneumatiques* », in « Génie Mécanique des Caoutchoucs », APOLLOR-INPL ; 151 ; (1997).
- RAULINE, Société Michelin, *demande de brevet européen,* n° de publication 0 501 227 A1, publiée le 02/09/92, Bulletin 92/36.

L'intérêt des silices précipitées comme charge renforçantes des élastomères et des pneumatiques en particulier ne fait que grandir, comme le démontre un échantillonnage des brevets récemment déposés par les producteurs de pneumatiques, d'élastomères ou d'additifs pour caoutchouc. La plupart de ces brevets visent à protéger une invention améliorant la dispersion de la silice dans l'élastomère et ses liaisons à celui-ci :
- Michelin - Durel / Rauline, WO-03/002649 A1 (2004-04-07)
- Michelin - Chevallier / Micoin, EP 1186629 (2002-03-13)
- Goodyear - Halusa, EP 1172405, (2002-01-16)
- Goodyear - Thielen, EP 1241203 et EP 1241204 (2002-09-18)
- Bridgestone - Hergenrother, EP 1282659 (2003-03-27)
- Bridgestone - Hogan, EP 1189766 (2002-02-12)
- Continental - Meier, EP 1215235 (2002-06-19)
- Continental - Peter, EP 1213110 (2002-06-12)
- Pirelli- Hotellier, EP 1165298 (2002-01-02)
- Pirelli - Schaal, EP 1259565 (2002-01-27)
- Exxon - Wong, EP 1309657 (2003-05-14)
- Flexsys - Datta, EP 1358263 (2003-11-05)

Les propriétés d'emploi de ces charges renforçantes peuvent être de différente nature. On peut en attendre, soit une amélioration des propriétés mécaniques statiques ou dynamiques de ces polymères, comme dans le cas du noir de carbone et de la Silice précipitée et de ses dérivés, soit une amélioration de la résistance à la combustion comme dans le cas de l'Alumine précipitée, soit des modifications des propriétés optiques comme dans le cas de l'Oxyde de Titane, soit un effet stabilisant dans le cas de l'Hydrotalcite et du Silicate de Calcium ou encore des modifications diverses dans le cas du Carbonate de Calcium précipité. La nature physico-chimique de ces produits minéraux et en particulier précipités, leur permet en effet de conférer des propriétés particulières aux composés polymériques et plus spécialement élastomériques auxquels ils sont incorporés. Sauf le noir de carbone, ces produits sont dits " précipités", car ils sont obtenus par précipitation à partir d'une de leurs solutions, généralement aqueuse, par action d'un réactif approprié, généralement aqueux également.

Dans le cas de la silice et des silico-aluminates, le produit de départ est une solution alcaline de silicate, improprement appelée traditionnellement "silicate liquide". Par addition d'un agent acide à ce silicate (solution aqueuse d'un acide dans le cas de la silice) on peut régénérer la fraction "silice" sous forme amorphe. Dans le cas des silico-aluminates, le silicate de départ est identique, l'agent acide utilisé est un sulfate d'alumine, et la fraction silice est récupérée sous forme d'un sel insoluble amorphe appelé silico-aluminate de sodium. Dans les deux cas, le produit de filtration est un concentré très humide de silice ou de silico-aluminate, appelé "gâteau de filtration" ou encore " slurry" lorsqu'il a été soumis à une agitation. Après une opération appropriée de séchage de ces slurries, les produits se présentent sous la forme d'une poudre de densité apparente assez faible (commercialement 0,2 ou inférieure) et d'humidité contrôlée à 105°C d'environ 5% en poids.
Sur les procédés de production et les propriétés des charges précipitées, le lecteur pourra se référer aux ouvrages et publications de base en la matière :
- ILER: "*The Colloid Chemistry of Silica and Silicates*", 1955, New York: Comell University Press
- KRAUS, " *Reinforcement of elastomers* " Interscience Publishers (1965)
- CARMAN: *Trans Faraday Soc.* 36; 52; 964; 973 (1940)
- BACHMAN, SELLER, WAGNER, WOLF: *Rubber Review* 32 n°5; 1286-1391 (1959)
- Société LE SILICATE : "*Silicates Alcalins*"; Dupuy-Paris; p. 12-13

Par modification des conditions opératoires, l'opérateur peut faire varier les caractéristiques du produit obtenu, en particulier son aptitude à la dispersion. De nouveaux procédés ont ainsi été mis en oeuvre, visant à produire des silices de structure différente et plus faciles à disperser finement et de façon homogène dans les polymères en général et les élastomères en particulier :
- CHEVALLIER, Société Rhône-Poulenc, *demande de brevet européen* n° 0 157 703, publiée le 09/10/85, Bulletin 85/41.
- BOMO CHEVALLIER LAMY MORAWSKI, Société Rhône-Poulenc, *demande de brevet européen* n° 0 217 701, publiée le 08/04/87, Bulletin 87/15
- PERSELLO, Société Rhône-Poulenc, *demande de brevet européen* n° 2 649 089, publiée le 04/01/91, BOPI « Brevets » n° 1.

Mais il est bien connu dans l'industrie concernée que le séchage, et plus particulièrement le mode de séchage, du "gâteau de filtration" ou slurry, affecte de façon importante et généralement négative l'aptitude à la dispersion dans un polymère de la silice obtenue, de par la cinétique de l'élimination de la matrice aqueuse et la modification corrélative de la structure de la silice. Comme il a été publié par :
- BOMAL COCHET DEJEAN FOURRE LABARRE, "Une silice de nouvelle génération pour pneumatique", *L'Act. Chim* (I) **1** ; 42 ; (1996)
- FERCH TOUSSAINT, "Synthetic amorphous silicas in fine powder form: definition, properties and manufacturing processes", *Kautsch. Gummi Kunstst*, **49,** 589 (1996).

Or, l'action de renforcement des charges dites renforçantes, et en particulier des silices et autres charges minérales, sur les polymères et les élastomères en particulier, fait suite à leur incorporation classique à ceux-ci au cours d'une opération mécanique de mélangeage, suivie nécessairement des opérations habituelles de mise en forme et de vulcanisation. Pour des produits identiques, le niveau du renforcement obtenu est fonction du niveau de dispersion et de l'homogénéité de répartition de ces charges minérales dans la matrice polymérique et plus spécialement élastomérique : plus la dispersion est fine, plus la surface de la charge minérale en contact avec la matrice est grande, et donc plus l'effet renforçant est sensible.
A ce sujet, le lecteur pourra consulter les publications et ouvrages de base suivants :
- DONNET, BANSAL, WANG: *"Carbon Science and Technology*", Marcel Dekker Inc. publisher, NY, USA (1993)
- BOMAL, COCHET, DEJEAN: "Influence of Specific Surface Area and quantity of precipitated silica on the properties of a silica filled Natural Rubber", *Rub. Chem. Techn.,* abs.-S93#39, 4, 685, (1993).
- KRAUS, "R*einforcement of elastomers "* Interscience Publishers (1965)

L'utilisateur a pourtant déjà noté que les produits minéraux précipités sous forme amorphe, et la silice précipitée en particulier, souffrent de plusieurs inconvénients, et ceci, même lorsqu'ils ont été obtenus selon les procédés relativement nouveaux mentionnés plus haut, et qu'ils reçoivent l'appellation de "Haute Dispersion". On peut mentionner, par exemple :
- une densité apparente assez faible, de l'ordre de 0,2 pour la poudre, et au maximum 0,35 pour des granulés compactés ou les micro-perles. Ce qui impose un volume de stockage important, et ralentit les opérations mécaniques d'incorporation au polymère.
- Une surface nettement hydrophile (présence de groupements hydroxyles -O-H en surface), ce qui implique une adsorption d'humidité importante. Ceci impose des conditions de stockage particulières, et peut conduire à des modifications de structure au cours du temps, sans parler des conditions thermo-mécaniques de mélangeage à respecter pour utiliser au mieux l'énergie libérée par le départ de l'humidité liée adsorbée en surface.
- Une porosité qui rend difficile la désorption d'humidité et donc le séchage, et lui fait absorber les ingrédients nécessaires à la vulcanisation des élastomères auxquels ils sont incorporés.
- Un manque naturel de compatibilité avec les polymères en général, lesquels présentent plutôt un caractère hydrophobe. Ceci influe négativement sur le mouillage de la charge hydrophile par la matrice polymérique hydrophobe, et rend plus difficiles ses liaisons à celle-ci, et donc peut diminuer l'action générale de renforcement.
- Une dispersion incomplète dans les polymères en général et les élastomères en particulier, ce qui réduit la surface utile renforçante en contact avec le polymère, réduit donc le pouvoir renforçant, et induit des phénomènes d'hystérèse dans le vulcanisât final.
- La nécessité d'emploi d'adjuvants particuliers pour obtenir le niveau désiré de liaisons à la matrice polymérique et donc de propriétés mécaniques de l'ensemble, les plus connus et utilisés étant le Poly Ethylène Glycol PEG pour les usages généraux, et les silanes pour les emplois plus particuliers.
Ces caractéristiques générales sont communes aux produits minéraux obtenus par précipitation sous forme dite "amorphe ".

De ce fait, des recherches ont été effectuées, visant à modifier la surface des produits minéraux en général, et de la silice précipitée en particulier, pour faciliter leur incorporation, améliorer leur compatibilité, mouillage et dispersion, et donc augmenter à la fois leur facilité d'emploi et leur pouvoir renforçant.
En particulier ont été testées les techniques de greffage de polymère en surface, d'encapsulage par ces mêmes polymères, ou de mélangeage à l'état suspension/slurry avec des émulsions de polymère ou d'élastomère.
Parmi les travaux visant à modifier la surface de la silice par greffage de polymère en surface ou encapsulage, on peut mentionner :
- DONNET RIESS MAJOWSKI, *European Polym*. J. 7, 1065, (1971)
- PAPIRER, V.T. NGUYEN, *J. Polym. Scien.,* Part B , (1972)
- PAPIRER, DONNET, V.T. NGUYEN, RIESS, *J. Polym. Scien,* part B, 9, 195, (1971)
- DODANE, Institut Français du Caoutchouc/IFOCA, (1973)

Or, les essais de greffage de polymères ou encapsulage par ceux-ci n'ont pas apporté les résultats attendus, car :
- Ils étaient pratiqués sur des produits standard, de dispersion relativement médiocre, et le dépôt de produit organique en surface n'était pas apte à améliorer en lui-même la dispersion du-dit produit précipité (dispersion des agglomérats secondaires en agrégats primaires), comme le font les agents de couplage connus sous le terme générique de "silanes ".
- Ils étaient pratiqués sur produits déjà séchés, et dont la structure a donc déjà été figée par l'opération de séchage, et par le départ de l'eau servant de véhicule à la suspension originelle du-dit produit. Cette eau permettait au produit en suspension de conserver un état de division supérieur à celui dont il souffre à l'état séché.
- Les polymères greffés en surface, ou utilisés pour encapsulage, étaient de faible poids moléculaire, ou des chaînes diéniques à faible nombre de carbone, donc de Poids Moléculaire relativement faible par rapport à celui du polymère constituant la matrice à laquelle les produits traités étaient incorporés en vue de renforcement. De ce fait, le nombre relativement peu élevé de doubles-liaisons disponibles sur l'agent traitant n'était pas suffisant pour assurer statistiquement une réaction avec l'agent de vulcanisation (Soufre en général) et donc une liaison covalente avec le reste de la matrice. L'agent de vulcanisation avait plus de probabilités de réaction avec les très nombreuses doubles-liaisons de la matrice, plutôt qu'entre celles de cette matrice et celles de l'agent traitant. L'objet minéral précipité, rendu plus compatible avec la matrice élastomérique de par son enveloppe organique, n'était pourtant pas lié à celle-ci par les ponts de soufre espérés entre l'agent traitant et la matrice. Il s'ensuivait que l'agent traitant consommait une partie importante de l'énergie de surface du produit considéré pour s'y adsorber, sans pour autant garantir une liaison par vulcanisation avec le reste de la matrice. Même plus, la consommation de l'énergie de surface au bénéfice de l'agent traitant provoquait une diminution quantitative de l'énergie disponible pour établir des liaisons de Van der Walls avec la matrice, comme c'est le cas pour un produit standard habituel dont la surface n'a pas été modifiée. De ce fait, plus compatibles avec la matrice, mais encore moins liées que de normal à celle-ci, les produits ainsi traités se comportaient de façon erratique au sein du polymère soumis à un travail. Ceci peut expliquer en partie la stagnation, ou même la diminution du pouvoir renforçant des produits minéraux ainsi traités, lorsqu'on les incorpore à un polymère en vue de son renforcement.
- Le séchage classique de l'ensemble obtenu, produit minéral à surface modifiée par un polymère ou encapsulé, provoquait une dégradation thermique de ce polymère par thermo-oxydation voire même une carbonisation, et ce, même en opérant avec des précautions particulières, sous vide par exemple. Ceci peut également expliquer en partie la stagnation, ou même la diminution du pouvoir renforçant des produits minéraux ainsi traités, lorsqu'on les incorpore à un polymère en vue de son renforcement.

Pour obvier à la plupart de ces inconvénients, et pour tirer parti de l'analogie de présentation entre les latex de polymère ( hauts-polymères naturels ou synthétiques en émulsion) et la silice au cours de sa fabrication en phase liquide (suspension plus ou moins riche en silice solide, slurry), certains ont essayé de combiner ces deux produits en phase liquide pour obtenir des silices à surface traitées, encapsulées, voire même des Mélanges-Maîtres de silice/haut-polymère. Parmi les travaux les plus représentatifs, on peut citer :
- DEGUSSA F.P. 2011000, Priorité 17.5.68, (P. 1770442.6) Allemagne, publié le 17/4/70.
- DEGUSSA G.B. 1280216, Priorité 12.10.68, (P 180027617) DT, Publié le 05/07/72.
- les nombreux brevets de M. BURKE (US 3523096 / US 3686113 / US 3686219 / US 3686220 / US 3689451 / US 3689452 / US 3691129 / US 37000690 / US 3700619 / US 3700620 / US 3700621 / US 3716513 / US 3840382/US 385594)
- plus récemment un brevet d'un fabricant de pneumatique : BRIDGESTONE , Yanagisawa / Someno, EP 1283219 (2003-02-12), avec latex de caoutchouc naturel et silice et/ou noir de carbone.
Pour ce faire, il est procédé au mélangeage d'une émulsion de latex de haut-polymère avec de la silice sous forme de "slurry " de filtration (suspension concentrée). A ce stade, la silice qui baigne encore dans un milieu liquide bénéficie d'un état de dispersion beaucoup plus fin que celui dont elle souffrira après séchage. Par conséquent son enrobage par un polymère se fera à une échelle de dispersion impossible à obtenir à partir d'un produit déjà séché. Le produit obtenu par mélangeage liquide des-dites suspensions minérales et des-dites émulsions polymériques est ensuite coagulé, séparé de la phase liquide surnageante, et traité selon les techniques habituelles dans l'industrie du latex, pour en évacuer mécaniquement le maximum d'eau.
Ce qui en théorie laissait espérer après séchage final l'obtention d'une charge ainsi traitée (ou d'un mélange-maître ainsi obtenu) offrant des avantages nombreux : d'abord une présentation facilitant les manipulations et les opérations industrielles en vue de son incorporation à un polymère solide, mais surtout l'obtention de propriétés mécaniques améliorées du fait d'une dispersion plus fine et plus homogène, entre autres un meilleur renforcement statique et une meilleure élasticité dynamique du vulcanisât final.

Reste à sécher ce coagulum pour permettre son incorporation normale à un polymère sec solide. Et c'est alors que les techniques habituelles de séchage conduisent à des problèmes qui annulent en grande partie les avantages attendus en termes de propriétés mécaniques, de par la dégradation thermique de la fraction polymère au cours de ce séchage. M. BURKE en particulier insiste dans tous ses brevets sur l'attention particulière à apporter à une réduction de la chaleur nécessaire au séchage complet du mélange-maître obtenu. Bridgestone (brevet cité EP 1283219 du 2003-02-12) sèche d'abord mécaniquement (cisaillement dans une extrudeuse double vis, suivi d'un séchage thermique classique éventuellement sous vide : drum dryer, band dryer, vacuum dryer), alors que les autres auteurs restent très discrets sur le procédé de séchage final utilisé en mentionnant seulement des procédés classiques comme le four tunnel ou l'atomisation. En fait les études de laboratoire ont démontré qu'un séchage classique doit être effectué sous vide au moins partiel pour éviter d'atteindre une température préjudiciable à la fraction élastomérique, et que même dans ces conditions (séchage effectué à une température inférieure à 100°C et sous vide) le polymère, finement réparti à la surface de la charge, se dégrade pendant cette opération thermique relativement longue (travaux de Donnet, Papirer et collaborateurs cités plus haut).

Il apparaît donc que l'opération de séchage est un point primordial dans les procédés d'élaboration de charges minérales traitées en surface, encapsulées ou présentées sous forme de mélange-maîtres, en vue de leur incorporation ultérieure à un mélange polymérique solide en tant qu'agent de renforcement ou de modification de celui-ci.

En particulier, le problème du séchage du coagulum résultant d'un mélange latex / slurry de silice n'est pas simple : il faut en effet sécher la fraction silice précipitée sans dégrader la fraction polymère.

La silice, très avide et riche en eau à l'état de slurry (humidité à 105°C d'environ 80% ou plus selon les espèces) doit être séchée jusqu'à une humidité à 105°C d'environ seulement 5%, ce qui nécessite des températures et/ou des temps de séchage assez élevés, du fait du très fort pourcentage d'eau dans le slurry, de l'hydrophilie naturelle de la silice précipitée, et de sa porosité. A l'inverse, les polymères, du fait de leur relative fragilité thermique, ont tendance à se dégrader assez rapidement lorsqu'ils sont soumis aux conditions de séchage (température et durée) requises pour sécher un slurry de silice selon les procédés classiques. Ceci est entre autres particulièrement valable pour le caoutchouc naturel, très sensible à la dégradation thermique. Le polymère est ici d'autant plus sensible à cette agression thermique qu'il est réparti en fine couche autour d'une charge elle-même finement divisée, et que pratiquement toute sa masse est accessible en même temps à la fois à la chaleur et à l'oxygène de l'air. L'énergie thermique nécessaire au séchage de la silice conduit alors à une dégradation du polymère suffisamment importante pour faire perdre les avantages mécaniques, statiques ou dynamiques, attendus d'une dispersion plus fine et plus homogène et d'un meilleur mouillage de la charge renforçante considérée et en particulier de la silice précipitée. D'autre part, en fonction des conditions opératoires, le produit obtenu par un séchage classique de ce coagulum peut se présenter sous forme d'une poudre de polymère chargé, finement divisée (brevet EP 1127911 de PKU PulverKautschuk Union, Herr GOERL, 2001-08-29). Cette poudre de polymère chargé sera donc soumise pendant le séchage, soit à une température d'environ 140/150°C pendant un temps assez long en atmosphère oxydante en four tunnel, soit à une température de l'ordre de plusieurs centaines de degrés Celsius pendant un temps court dans le cas d'un séchage flash par atomisation. Dans les deux cas, le risque d'incendie par auto-inflammation de la poudre de polymère est relativement important pendant l'opération de séchage et au cours des transports consécutifs.

Cette voie humide (slurry + latex) de fabrication de charges traitées en surface, encapsulées, ou présentées sous forme de mélange-maître, parfois appelée "co-mélange ", est très élégante dans son principe, et laissait espérer des résultats intéressants de dispersion et mouillage de la charge, et par-là donc des amélioration des propriétés mécaniques statiques et dynamiques des mélanges de polymères ou d'élastomères auxquels la-dite charge serait incorporée sous cette forme. Mais, du fait des difficultés inhérentes à la mise au point d'un compromis entre un bon séchage de la fraction charge minérale et une bonne conservation de la structure macro-moléculaire de la fraction polymère, le tout dans des conditions acceptables de sécurité industrielle, elle n'a reçu à ce jour aucun développement industriel.

Les problèmes posés par les méthodes traditionnelles de séchage tiennent essentiellement à deux faits :
- la source de chaleur est extérieure au corps à sécher, et par conséquent cette chaleur se propage de la périphérie vers l'intérieur de ce corps. Dans le cas présent d'un mélange d'une silice très chargée en eau et enrobée d'une coquille de polymère, la chaleur doit d'abord diffuser dans la couche polymérique périphérique avant d'atteindre le coeur silice et d'y évaporer l'eau. De ce fait, et compte tenu des pertes dans la transmission de chaleur, le polymère situé à la frange extérieure de l'ensemble est soumis pendant toute la durée de l'opération à une température supérieure à celle nécessaire à l'évaporation de l'eau contenue dans le mélange et en particulier absorbée par la silice au coeur de celui-ci.
- d'autre part, l'énergie thermique fournie à l'ensemble est utilisée pour chauffer aussi bien l'eau à évaporer que la charge poreuse qui la contient et le polymère qui entoure celle-ci.

L'objet de la présente invention est un procédé de production de charges traitées en surface, encapsulées ou présentées sous forme de mélange-maître ou d'alliages composites, par l'application d'une méthode originale de séchage au coagulum préalablement obtenu par mélangeage et coagulation conjointe d'une suspension concentrée ou non de produits minéraux considérés, et en particulier de la silice précipitée et même du noir de carbone, avec un latex de polymère. Cette méthode est basée sur l'emploi des UHF (micro-ondes), ce qui permet d'atteindre le double objectif de sécher à volonté la fraction minérale sans dégrader la fraction polymère.

L'emploi des UHF (micro-ondes) présente l'avantage de mettre en mouvement et donc d'échauffer essentiellement les liaisons -O-H, et par conséquent de chauffer et d'évaporer l'eau en n'exposant le polymère qu'à un niveau de température très limité et non-dégradant. Dans ce procédé UHF, la chaleur nécessaire au séchage est générée in-situ et n'est donc pas obligée de traverser la couche polymérique avant d'atteindre la silice à sécher, ce qui réduit la quantité de chaleur reçue par la-dite couche polymérique. D'autre part, cette génération de chaleur ne se produit qu'en présence des liaisons -O-H, là donc où elle est nécessaire pour évaporer l'eau H-O-H, et non dans la structure macro-moléculaire du polymère s'il ne présente pas de liaison de ce type, ce qui est le cas le plus courant. Enfin, cette génération de chaleur induit une élévation de température limitée en théorie par la température d'ébullition de l'eau, et cesse pratiquement après le départ de l'eau, réduisant encore ainsi l'exposition du polymère à un risque de dégradation thermique.

Par conséquent, ce procédé permet d'évaporer l'eau contenue dans la fraction minérale du mélange, et en particulier dans la fraction "slurry de silice" jusqu'au niveau de siccité voulu, sans diminuer les propriétés mécaniques du polymère par dégradation thermique de celui-ci. Il permet donc enfm d'obtenir les propriétés mécaniques avantageuses attendues d'un tel mélange se présentant sous la forme, selon les proportions charge/polymère, soit d'un mélange-maître ou d'un alliage composite charge/polymère, soit d'une charge encapsulée par du polymère ou d'une charge dont la surface a été modifiée par la présence d'un faible pourcentage de polymère. Dans tous les cas, la charge minérale bénéficie d'une très bonne dispersion dans l'élastomère, équivalente à celle dont elle bénéficiait à l'état de slurry humide, et d'un meilleur mouillage par ce même polymère. Mais surtout le polymère conserve ses caractéristiques mécaniques car sa structure macromoléculaire n'est pas dégradée. D'autre part, le faible niveau de température atteint, et ce pendant un temps limité, et décroissant naturellement après le départ de l'eau, fait que le risque d'auto-inflammation pendant l'opération est infime.

L'utilisation de ce mode de séchage permet donc enfin de sécher la fraction minérale sans dégrader la fraction polymérique, et donc d'obtenir les améliorations des propriétés mécaniques attendues de ce type de mélange, dont l'homme de l'art connaît bien par ailleurs les avantages d'utilisation, entre autres : densité apparente plus élevée de la charge traitée, facilité d'incorporation, dispersion plus fine et répartition plus homogène de cette charge dans les polymères.

### EXEMPLES :

Exemples de séchage par UHF du coagulum préalablement obtenu par mélangeage et coagulation conjointe d'un latex de polymère et d'un slurry de silice précipitée.

Il est d'abord procédé à la fabrication et à la coagulation d'un mélange de slurry de silice et de latex de caoutchouc naturel, selon les techniques déjà connues pour ce faire et citées ci-dessus. La confection du mélange n'étant pas le sujet de la présente invention, il suffira de dire qu'il a été réalisé selon des techniques déjà connues en tenant compte des viscosités respectives du slurry de silice et du latex de caoutchouc naturel, que l'ordre et le processus d'addition des composants ont été établis de façon à ne pas provoquer une coagulation précoce du latex, que la coagulation n'est intervenue selon les techniques habituelles dans l'industrie du latex, que lorsque le mélange latex+slurry a été réalisé et homogène, que le coagulum obtenu a été soigneusement lavé, et que le maximum d'eau surnageant a été évacué mécaniquement selon des techniques connues et habituelles dans l'industrie du latex.

Exemple n°1,
dans lequel les proportions respectives de latex et de slurry de silice ont été choisies de façon telle que le mélange une fois séché soit constitué de 20% d'élastomère caoutchouc (poly-isoprène naturel) et de 80% de silice précipitée contenant 5% d'humidité mesurée à 105°C.
Le coagulum obtenu a été partagé en trois parties strictement égales (contenant chacune environ 100 grammes d'extrait sec total : soit 80 de silice et 20 de polymère), qui sont séchées séparément et comparativement. La première partie est séchée dans un four UHF (micro-ondes), la deuxième dans une étuve réglée à 100°C et la troisième dans une étuve réglée à 150 °C, jusqu'à obtention d'un produit final d'humidité 105°C d'environ 4 %, correspondant à 5% d'humidité de la fraction silice dans les mêmes conditions.

### Résultats : Tableau T1

| **Mode de séchage:** | **UHF** | ***étuve 100°C*** | **étuve 150°C** |
|---|---|---|---|
| | | | |
| Temps nécessaire, en minutes | 45' | *> à 600'* | 310' |
| Température finale °C : | 90 | *100* | 150 |
| Aspect : | poudre fine fibreuse | *poudre* | poudre compacte |
| Couleur | blanc, très homogène . | *blanc, avec des points jaunâtres..* | blanchâtre, avec des points brunâtres |
| Densité apparente poudre | 0,34 | *0,35* | 0,35 |
| Densité apparente compactée: | 0,58 | *0,62* | 0,66 |

### Commentaires :

- Les résultats exposés au tableau (1) montrent de façon éloquente que le séchage par UHF est beaucoup plus rapide même à température plus basse, que ceux opérés par le procédé classique d'étuvage.
- Les trois produits séchés différemment se présentent sous l'aspect connu des co-mélanges de ce type à forte concentration en silice: une poudre dense. Cependant des différences nettes sont à noter selon le mode de séchage appliqué: blanc très pur et aspect « sec » dans le cas du séchage par UHF, en opposition à la présence de points jaunâtres à brunâtres dans le cas du séchage traditionnel en étuve, avec une consistance plus ou moins poisseuse voire collante, caractéristique d'une thermo-oxydation dégradante du polymère Caoutchouc Naturel (poly-isoprène naturel). Ceci est relié à la différence de température et de temps de séchage entre les deux procédés.
- La poudre obtenue par séchage par application du procédé UHF se laisse compacter, permettant ainsi l'obtention de blocs compacts simples à manipuler et très faciles à déliter.

Le séchage par UHF (micro-ondes) appliqué au coagulum préalablement obtenu par mélangeage et coagulation conjointe d'un slurry de silice et d'un latex de polymère présente sur les procédés classiques les avantages d'être plus rapide même à température plus basse, et donc de moins dégrader la fraction polymère. Le procédé est d'autant plus intéressant dans l'exemple (1) que la fraction de polymère est minime par rapport à celle de la silice, et que ce polymère réparti à la surface de la silice doit subir l'action de la chaleur pendant tout le temps de l'opération de séchage de la fraction silice, la plus importante.

Exemple n°2 :
dans lequel les proportions respectives de latex et de slurry de silice ont été choisies de façon telle que le mélange une fois séché soit constitué de 50% d'élastomère caoutchouc (poly-isoprène naturel) et de 50% de silice précipitée contenant 5% d'humidité mesurée à 105°C.

Le coagulum obtenu a été partagé en trois parties strictement égales (contenant chacune environ 100 grammes d'extrait sec total : soit 50 de silice et 50 de polymère), qui sont séchées séparément et comparativement. La première partie est séchée dans un four UHF (micro-ondes), la deuxième dans une étuve réglée à 100°C et la troisième dans une étuve réglée à 150 °C, jusqu'à obtention d'un produit final d'humidité 105°C d'environ 2,5 %, correspondant à 5% d'humidité de la fraction silice dans les mêmes conditions.

### Résultats : Tableau T2

| **Mode de séchage:** | **UHF** | ***étuve 100°C*** | **étuve 150°C** |
|---|---|---|---|
| | | | |
| Temps nécessaire, en minutes | 30' | *360'* | 190' |
| Température finale °C : | 85 | *100* | 150 |
| Aspect : | masse grumeleuse poreuse blanche friable | *masse grumeleuse blanchâtre compacte...* | masse grumeleuse blanchâtre compacte.. |
| Couleur | blanc, très pur | *traces jaunâtres* | traces brunâtres |
| Densité compactée: | 0,82 | *0, 98* | 1,1 |

### Commentaires :

- Les résultats exposés au tableau (2) montrent de façon éloquente que le séchage par UHF est beaucoup plus rapide même à température plus basse, que ceux opérés par le procédé classique d'étuvage.
- Les trois produits séchés différemment se présentent sous l'aspect connu des co-mélanges de cette concentration : une masse grumeleuse plus ou moins friable. Cependant des différences nettes sont à noter selon le mode de séchage appliqué: blanc très pur et aspect « sec » et relativement friable dans le cas du séchage par UHF, en opposition à la présence de nuances jaunâtres à brunâtres dans le cas du séchage traditionnel en étuve, avec une consistance plus collante, caractéristique d'une thermo-oxydation dégradante du polymère Caoutchouc Naturel (poly-isoprène naturel). Ceci est relié à la différence de température et de temps de séchage entre les deux procédés.
- Le compactage n'a été effectué que par pression élémentaire après refroidissement. Un procédé de compactage par passage entre des cylindres selon des techniques habituelles dans l'industrie du caoutchouc peut conduire à des densités plus élevées.

Le procédé objet de l'invention appliqué au coagulum préalablement obtenu par mélangeage et coagulation conjointe d'un slurry de silice et d'un latex de polymère présente sur les procédés classiques les avantages d'être plus rapide même à température plus basse, et donc de moins dégrader la fraction polymère. Il apporte donc une amélioration notable à la qualité et aux propriétés de ces produits, en ce sens que l'absence de dégradation thermique permet une meilleure conservation des propriétés propres de cette fraction polymérique.
Compte-tenu des faibles durées et températures nécessaires, les risques d'auto-inflammation sont de plus très limités.

Le problème se présente de façon identique lorsque la charge considérée est le « Noir de Carbone », encore appelé « Carbon Black ». Ce produit est une charge renforçante très utilisée depuis presque un siècle dans toutes les applications des élastomères. Des analogies de structure existent entre la silice précipitée et le noir de carbone (taille des particules élémentaires et existence de structure primaire et secondaire entre autres). Pour de plus amples informations concernant les caractéristiques et le mode d'action de ce noir de carbone, le lecteur peut se référer aux deux principaux ouvrages déjà cités :
- DONNET, BANSAL, WANG: *"Carbon Science and Technology*", Marcel Dekker Inc. publisher, NY, USA (1993)
- KRAUS, *"Reinforcement of elastomers* " Interscience Publishers (1965)

Obtenu par divers procédés sous forme de poudre extrêmement fine avant pelletisation, le noir de carbone peut être mis en suspension selon des procédés habituels à l'industrie des encres. Le noir de carbone est généralement répertorié parmi les charges « minérales ». Or, il se trouve que ce noir de carbone possède une grande capacité d'absorption des liquides, qui peut même approcher celle de certaines silices précipitées. De ce fait, le séchage d'un coagulum préalablement obtenu par mélangeage et coagulation conjointe d'une émulsion de polymère avec une suspension de noir de carbone est sujet à des problèmes de dégradation de la phase polymérique analogues à ceux rencontrés dans le cas où la charge est de la silice. Or, les mélanges-maîtres polymères /noir de carbone sont très utilisés dans l'industrie du caoutchouc où ils ont même fait l'objet d'une normalisation et d'une nomenclature normalisée, bien connue de l'homme de l'art; et ces mélanges-maîtres sont habituellement fabriqués par incorporation mécanique du noir de carbone pelletisé au polymère sous forme sèche. Une solution au problème du séchage d'un coagulum préalablement obtenu par mélangeage et coagulation conjointe d'une émulsion de polymère avec une suspension de noir de carbone permettrait de s'affranchir des opérations de pelletisation du noir et de mélangeage à sec, et apporterait une amélioration notable à la qualité de dispersion de la charge dans le polymère.
Un bon exemple d'une telle préparation d'un mélange-maître élastomère /noir de carbone à base d'une émulsion d'élastomère et de noir de carbone en poudre, est disponible dans le brevet déjà cité EP 1127911 de PKU PulverKautschuk Union, Herr GOERL, du 2001-08-29. Le séchage du coagulum obtenu n'y fait appel qu'à des techniques très classiques : mécaniques d'abord - centrifugeuses ou filtre à bande sous vide, puis thermiques par lit fluide (Wirbelbetttrockner). Le séchage par UHF, présentant l'avantage d'opérer plus rapidement et à plus basse température que les procédés classiques, et donc moins dégradant pour la fraction élastomérique, apporte une amélioration certaine à ce procédé.

En résumé, le procédé objet de l'invention permet la production de charges et additifs minéraux traités en surface, encapsulés ou présentés sous forme de mélanges-maîtres ou d'alliages composites, et il est caractérisé en ce que le coagulum préalablement obtenu par mélangeage et coagulation conjointe d'une émulsion de polymère avec une suspension d'un composé minéral est séché par application de Ultra Hautes Fréquences UHF.
Il s'applique en particulier :
- Lorsque la suspension du composé minéral est concentrée et porte le nom de slurry.
- Lorsque l'émulsion de polymère est une émulsion ou un latex d'élastomère naturel ou synthétique. Parmi les émulsions de polymère on peut mentionner de façon non-limitative les émulsions ou latex de polymère Poly-Chlorure de Vinyle PVC (Poly-Vinyl-Chloride). Parmi les émulsions d'élastomère, on peut mentionner de façon non-limitative les latex ou émulsions de Caoutchouc Naturel dit Latex Naturel ( poly-isoprène naturel dit NR Natural Rubber), ou d'élastomères synthétiques tels les latex de polymère Poly-Isoprène IR (Isoprene Rubber), de polymère Styrène-Butadiène SBR (Styrene-Butadiene Rubber), de polymère Poly-Butadiène BR (Butadiene Rubber), de polymère Poly-Chloroprène CR (Chloroprene Rubber), de polymère Nitrile NBR (Nitrilacrylic Butadiene Rubber), et de polymère de Poly-organosiloxane Silicone Si.
- Lorsque la suspension du produit minéral est une suspension concentrée ou non d'un produit minéral obtenu par précipitation. Parmi les suspensions ou slurries de produits minéraux obtenus par précipitation, on peut mentionner, de façon non-limitative, les suspensions ou slurries de Silice, d'Alumine ou d'Hydrotalcite précipitées, de Silico-Aluminates, de Silicates de métaux alcalino-terreux, d'Oxyde de Titane ou de Carbonate de Calcium précipités. Dans le cas particulier du Carbonate de Calcium Précipité, le procédé présente l'avantage supplémentaire d'échauffer de façon très limitée la fraction minérale elle-même, et donc de réduire également le risque de dégradation thermique de celle-ci.
- Lorsque la suspension du produit minéral est une suspension concentrée ou non d'un produit minéral, obtenue par mise en suspension d'un produit minéral naturel ou non et finement divisé, incluant le noir de carbone, ou par la remise en suspension d'un produit minéral précipité et déjà séché.
- Lorsque la suspension concentrée ou non de produit minéral est obtenue par mélangeage de deux ou plusieurs suspensions de produits minéraux, elles-mêmes mélangées entre elles.
- Lorsque l'émulsion de polymère est obtenue par mélangeage de deux ou plusieurs émulsions de polymère, elles-mêmes mélangées entre elles.

Le procédé peut être mis en oeuvre dans les fours UHF appropriés, de façon continue ou discontinue, en se conformant aux méthodes habituelles d'emploi des UHF.

Selon les proportions choisies de produit minéral et de polymère, les produits obtenus sont des charges et additifs pour polymères, du type pouvant être préparé par le procédé objet de l'invention, et sont caractérisés en ce qu'ils résultent du séchage par UHF du coagulum préalablement obtenu par mélangeage et coagulation conjointe d'une émulsion de polymère avec une suspension de produits minéraux. Mais ils peuvent aussi se présenter sous forme de mélanges-maîtres ou d'alliages composites du type pouvant être préparé par le procédé objet de l'invention, et qui sont également caractérisés en ce qu'ils résultent du séchage par UHF du coagulum préalablement obtenu par mélangeage et coagulation conjointe d'une émulsion de polymère avec une suspension de produits minéraux.

Le procédé est plus particulièrement destiné à l'élaboration de traitement de surface des charges et additifs minéraux pour polymères, à leur encapsulage, et à la fabrication de mélanges-maîtres et d'alliages composites de ces mêmes produits minéraux dans des polymères.

A titre d'exemple non-limitatifs, on peut mentionner l'application du procédé de séchage à la production de charges et additifs pour polymères, dont la surface ainsi traitée, outre des manipulations plus faciles et plus rapides, permet un meilleur mouillage par celui-ci et une dispersion plus fine et plus homogène en son sein, avec emploi possible dans tous les secteurs de l'industrie des polymères et des élastomères en particulier.

On peut aussi mentionner de façon non-limitative l'application du procédé de séchage à la fabrication de mélanges-maîtres et d'alliages composites variés, par exemple de NR/Silice, ou de CR/Alumine, ou de SBR/Silico-Aluminate, ou de SBR/NR/Silice, ou de Silicone/silice précipitée, ou de PVC/Carbonate de Calcium précipité, ou de PVC/NBR/Silice, de PVC/TiO2, ou encore de PVC/Silicate de Calcium/Hydrotalcite. Chacun de ces alliages ou mélanges-maîtres présentant à des degrés divers un intérêt pour l'industrie, où ils sont déjà utilisés après confection par des moyens mécaniques à partir de produits secs. Les mélanges-maîtres ou alliages composites selon le procédé peuvent être utilisés comme composant principal d'un mélange polymérique ou comme additifs à des fins particulières de formulation.

## Revendications

1. Procédé de production de charges minérales traitées en surface, encapsulées ou présentées sous forme de mélange-maître ou d'alliage composite, **caractérisé en ce que** le coagulum préalablement obtenu par mélangeage et coagulation conjointe d'une émulsion de polymère avec une suspension d'un composé minéral est séché par application de Ultra Hautes Fréquences UHF.

2. Procédé de production selon la revendication 1, **caractérisé en ce que** le produit à sécher résulte du mélangeage d'une émulsion de polymère et d'une suspension d'un composé minéral, dans lequel la suspension du composé minéral est concentrée et porte le nom de slurry.

3. Procédé de production selon l'une quelconque des revendications précédentes, **caractérisé en ce que** le produit à sécher résulte du mélangeage d'une suspension d'un produit minéral avec une émulsion de polymère, dans laquelle l'émulsion de polymère est une émulsion ou un latex d'élastomère naturel ou synthétique.

4. Procédé de production selon l'une quelconque des revendications précédentes, **caractérisé en ce que** le produit à sécher résulte du mélangeage d'une émulsion de polymère avec une suspension d'un produit minéral obtenu par précipitation.

5. Procédé de production selon la revendication 4 **caractérisé en ce que** le produit à sécher résulte du mélangeage d'une émulsion de polymère avec une suspension d'un produit minéral obtenu par précipitation, et plus particulièrement de Silice, d'Alumine ou d'Hydrotalcite précipitées, de Silico-Aluminates, de Silicates de métaux alcalino-terreux, d'Oxyde de Titane ou de Carbonate de Calcium précipités.

6. Procédé de production selon l'une quelconque des revendications 1 à 3, **caractérisé en ce que** le produit à sécher résulte du mélangeage d'une émulsion de polymère avec une suspension de produit minéral obtenue par mise en suspension d'un produit minéral naturel ou non, finement divisé, incluant le noir de carbone, ou par la remise en suspension d'un produit minéral précipité et déjà séché.

7. Procédé de production selon l'une quelconque des revendications précédentes, **caractérisé en ce que** le produit à sécher résulte du mélangeage d'une émulsion de polymère avec une suspension de produits minéraux obtenue par mélangeage de deux ou plusieurs suspensions de produits minéraux.

8. Procédé de production selon l'une quelconque des revendications précédentes, **caractérisé en ce que** le produit à sécher résulte du mélangeage d'une suspension de produits minéraux avec une émulsion de polymères obtenue par mélangeage de deux ou plusieurs émulsions de polymère.

9. Charges et additifs minéraux pour polymères du type pouvant être préparé par le procédé selon l'une quelconque des revendications précédentes, **caractérisés en ce qu'**ils résultent du séchage par UHF du produit obtenu par mélangeage d'une émulsion de polymère avec une suspension de produits minéraux.

10. Mélanges-maîtres ou alliages composites du type pouvant être préparés par le procédé selon l'une quelconque des revendications précédentes, **caractérisés en ce qu'**ils résultent du séchage par UHF du produit obtenu par mélangeage d'une émulsion de polymère avec une suspension de produits minéraux.
